(19) Europäisches Patentamt
European Patent Office
Office européen des brevets

(11) **EP 3 487 117 B1**

(12) **EUROPEAN PATENT SPECIFICATION**

(45) Date of publication and mention
of the grant of the patent:
**06.01.2021 Bulletin 2021/01**

(51) Int Cl.:
*H04L 9/08* (2006.01)          *H04L 1/08* (2006.01)
*H04L 1/18* (2006.01)          *H04W 12/04* (2021.01)

(21) Application number: **18206693.6**

(22) Date of filing: **16.11.2018**

(54) **ENCRYPTION KEY EXCHANGE WITH COMPENSATION FOR RADIO-FREQUENCY INTERFERENCE**

VERSCHLÜSSELUNGSSCHLÜSSELAUSTAUSCH MIT KOMPENSATION VON HOCHFREQUENZSTÖRUNGEN

ÉCHANGE DE CLÉ DE CRYPTAGE À COMPENSATION D'INTERFÉRENCE DE RADIOFRÉQUENCE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.11.2017 US 201715816356**

(43) Date of publication of application:
**22.05.2019 Bulletin 2019/21**

(73) Proprietor: **Simmonds Precision Products, Inc. Vergennes, VT 05491 (US)**

(72) Inventors:
• **TROUTMAN, Nicholas**
**League City, TX Texas 77573 (US)**

• **ZAKRZEWSKI, Radoslaw**
**South Burlington, VT Vermont 05403 (US)**
• **FITZHUGH, Christopher**
**Essex Junction, VT Vermont 05452 (US)**

(74) Representative: **Dehns**
**St. Bride's House**
**10 Salisbury Square**
**London EC4Y 8JD (GB)**

(56) References cited:
**EP-A1- 2 154 814          EP-A1- 3 116 187**
**US-A1- 2002 159 598      US-A1- 2005 015 589**
**US-A1- 2009 280 822**

**Description**

BACKGROUND

The present invention relates generally to wireless encryption, and in particular to a system and method for wireless encryption key exchange.

Wireless networks that include nodes, such as sensor networks and actuator networks often encrypt data for wireless communication between the nodes and a data concentrator, for example. In order to ensure that the wireless network remains secure, it is necessary to periodically update encryption keys for all nodes on the wireless network.

The available computing resources in these wireless networks are typically highly asymmetric. For example, a data concentrator or other access point may include a wired connection and be capable of energy-demanding data processing, while the wireless nodes may be battery-powered and configured to conserve energy. Uncertainty in data transmission is also an issue with wireless networks. For example, encryption key updates may fail due to some of the relevant transmission from the data concentrator not being received by the node due to random interference or due to temporary deterioration of radio-frequency (RF) propagation, for example. Thus, it is desirable to implement a system and method that increases the probability that each node on the network is able to receive encryption key updates from the data concentrator, while also requiring minimal data processing at the wireless nodes. EP 2154814, US 2005/015589, EP 3116187 and US2002/0159598 disclose encryption key distribution schemes. US 2009/280822 relates to determining a target number of transmission attempts in a wireless network.

SUMMARY

According to a first aspect of the invention there is provided a method of wirelessly exchanging encryption keys between an initiator and a responder as claimed in claim 1.

According to a second aspect of the present invention there is provided a system as claimed in claim 9.

According to a third aspect of the present invention there is provided an initiator as claimed in claim 13.

BRIEF DESCRIPTION OF THE DRAWINGS

FIG. 1 is a block diagram illustrating a wireless initiator configured to manage encryption key exchange with wireless responders.
FIG. 2 is a flowchart illustrating a method of wirelessly exchanging secret keys for an initiator.
FIG. 3 is a flowchart illustrating a method of wirelessly exchanging secret keys for a responder.

DETAILED DESCRIPTION

A wireless communication system is disclosed herein that accounts for radio-frequency (RF) interference when exchanging encryption keys. An initiator generates a new secret encryption key. The initiator encrypts, with a current secret encryption key, a message that includes the new key. The initiator sends the message to a wireless responder. If the initiator receives an acknowledgement, then the initiator sets the new key as the current key.

The initiator attempts to send the message a number of times that is based on a measured RF interference. If the initiator does not receive an acknowledgement after the selected number of attempts, the initiator encrypts the message with a different encryption key, such as a static secret encryption key. The initiator once again attempts to send the message the number of times based on the measured RF interference. If the initiator receives an acknowledgement, then the initiator sets the new key as the current key. If the initiator does not receive an acknowledgement after all attempts and after trying all encryption keys, the initiator transitions into an exception handling state with respect to the responder.

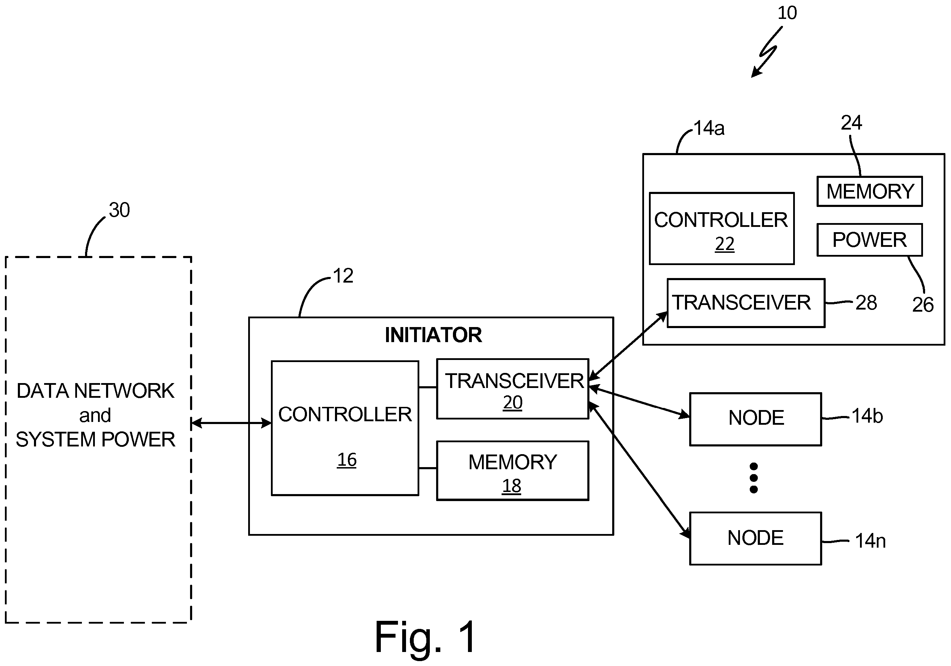

FIG. 1 is a block diagram illustrating system 10 that includes initiator 12 configured to manage wireless encryption key exchange with wireless nodes 14a-14n. While illustrated as a single initiator 12 communicating with wireless nodes 14a-14n, any number of wireless initiators may be configured to communicate with any number of wireless responders. Initiator 12 may be any system or device configured to enable wireless, encrypted, communication with nodes 14a-14n such as a data concentrator, network coordinator, access point, or any other wireless initiator. System 10 may be implemented in any location for which wireless communication with nodes is desirable. For example, system 10 may be implemented onboard an aircraft, and nodes 14a-14n may be sensors and/or actuators.

Initiator 12, and each wireless node 14a-14n, may be configured uniquely based upon the needs of system 10, for example. In the embodiment illustrated in FIG. 1, initiator 12 includes controller 16, memory 18, and transceiver 20.

Wireless node 14a includes controller 22, memory 24, local power source 26, and transceiver 28. The remaining wireless nodes 14b-14n may be configured in a similar manner to wireless node 14a, or may be implemented with different configurations. Controller 16 may include one or more microcontrollers, microprocessors, application specific integrated circuits (ASICs), field programmable gate arrays (FPGAs), or any other digital or analog circuitry. Controller 16 may include sufficient computing resources to generate encryption keys that are difficult to predict, for example. Memory 18 may include one or more volatile and/or non-volatile memories. Transceivers 20 and 28 may be any wireless transceiver such as, for example, a commercial off-the shelf system-on-chip transceiver, a custom designed multi-chip transceiver circuit, or any other transceiver.

In the embodiment illustrated in FIG. 1, initiator 12 may receive wired power, and communicate with data network and system power 30. Data network and system power 30 may include a wired data communication bus, a wired power bus, or both. For example, in the embodiment in which system 10 is implemented on an aircraft, the wired power bus may be a 28V aircraft power bus that receives power from one or more generators. The wired data communication bus may be an aircraft data bus that allows initiator 12 to communicate with other aircraft systems, such as other initiators, avionics systems, or any other system connected to the data communication bus.

Periodically, to ensure security of the wireless system, initiator 12 will want to update the secret encryption keys utilized for encrypted communication between initiator 12 and wireless nodes 14a-14n. To do this, all wireless nodes 14a-14n must update to the respective new encryption keys. Some or all of wireless nodes 14a-14n may receive the same new key, and/or some or all of wireless nodes 12a-12n may each receive a different new key. Upon generation of new secret encryption keys, initiator 12 must communicate the new keys to wireless nodes 14a-14n. This communication must also be encrypted and thus, initiator 12 will encrypt the data message that includes the new key using the current secret encryption key. Because wireless nodes 12a-12n may each be using a different current secret key, initiator 12 will encrypt a respective new secret key for a node 14a-14n using its respective current secret key. Initiator 12 will then send the encrypted key update message to wireless nodes 14a-14n and expect each wireless node 14a-14n to begin encrypted communication using the respective new secret encryption key.

After sending the message with the new encryption key to a wireless node 14a, for example, initiator 12 expects to receive an acknowledgement and expects wireless node 14a to use the new key for all future communication. This method, however, is vulnerable to message loss between initiator 12 and wireless node 14a. In the scenario in which the message from initiator 12 is lost, initiator 12 will be operating using the new encryption key, while wireless node 14a will be operating using the previous encryption key. In the scenario in which the acknowledgement from wireless node 14a is lost, wireless node 14a will be operating with the new encryption key, but initiator 12 will be unaware that wireless node 14a has successfully updated its encryption key.

In addition to transmission loss, power reset of wireless node 14a, or any other nodes 14b-14n, can also create issues with the encryption key exchange. Power reset may occur due to any number of reasons such as unexpected power loss, or any other resetting or restarting due to any event such as a reset triggered by a watchdog timer, for example. In some embodiments, wireless nodes 14a-14n may be sensor nodes or other remote data nodes with limited computing and/or power capabilities. For example, local power source 26 may be an energy harvester or battery and controller 16 may be a low power controller. If wireless responder 14a temporarily loses power, it may reset to its default configuration and may lose all content in any volatile portions of memory 24, for example.

In one example embodiment, local power source 26 may be an energy harvester configured to convert mechanical, thermal, or other energy from the environment into electrical power for wireless node 14a. In this embodiment, power may be lost for wireless node 14a if there is not enough energy for conversion by the energy harvester to power wireless node 14a. In other embodiments, with or without energy harvesters, other temporary storage elements such as batteries and supercapacitors, for example, may deplete, causing a power reset for wireless node 14a.

If a power reset occurs, wireless node 14a may lose the current secret encryption key stored in a volatile portion of memory 24. To continue secure communication, wireless node 14a may need to use a static key stored in a non-volatile portion of memory 24, for example. However, use of a static key may be less secure than use of the new key, since it is not replaced or updated during use of system 10. While described as volatile and non-volatile "portions" of memory 24, wireless node 14a may include one or more separate volatile and/or non-volatile memory devices.

To accommodate the above scenarios in which messages, acknowledgements, and/or power are lost during an encryption key exchange, initiator 12 and wireless nodes 14a-14n are configured to execute a key exchange protocol that accounts for the possible losses of data. This protocol takes into account a current, measured, RF interference. Transceiver 20 is capable of measuring RF energy present in the communication channel. Controller 16 may use the measured RF energy to determine an iteration number, which may be an estimated maximum number of attempts for a message to be successfully delivered to a node 14a-14n, for example.

The estimated maximum number of attempts may be obtained using a probabilistic analysis, for example. A known average or expected number of iterations based upon the measured RF interference, for example, may be utilized to determine the estimated maximum. Additionally, the desired probability that the acknowledgement is received within the estimated maximum may be selected based on the needs of the system. For example, if the system is a critical system in which there is little drawback to repeated transmissions, then the estimated maximum may be selected such that there is a 99% chance that the acknowledgement will be received within the estimated maximum number of attempts. Alternatively, if the system provides a speed intensive service with non-critical information, the estimated maximum may be selected such that there is a lower, such as 60%, chance that the acknowledgment will be received.

Initiator 12 may then attempt to send the encrypted message that includes the new key to each wireless node 14a-14n. Until initiator receives an acknowledgment, initiator 12 will attempt to resend the message the iteration number of times. If initiator 12 receives the acknowledgment within the iteration number of attempts, then the encryption key exchange was successful.

If initiator 12 did not receive an acknowledgement, initiator 12 may attempt to send the new key in a message encrypted by a previous key. For example, initiator 12 may have a "key stack" implemented in memory 18. An example key stack for initiator 12 is illustrated in Table 1, below. The first key in the stack may be the current encryption key, and the last key in the stack may be a static encryption key. The static encryption key may be a key that is stored in a non-volatile memory and acts as a default encryption key. Initiator 12 may encrypt the message using the static key, and attempt to send the message the iteration number of times. If initiator 12 receives an acknowledgment, the key exchange was successful. If, following the attempts using the static key, initiator 12 did not receive an acknowledgement, an exception handling state may be indicated for the respective wireless node 12a-12n.

Table 1 - Example Key Stack for Initiator 12

| Current Key |
| --- |
| Static Key |

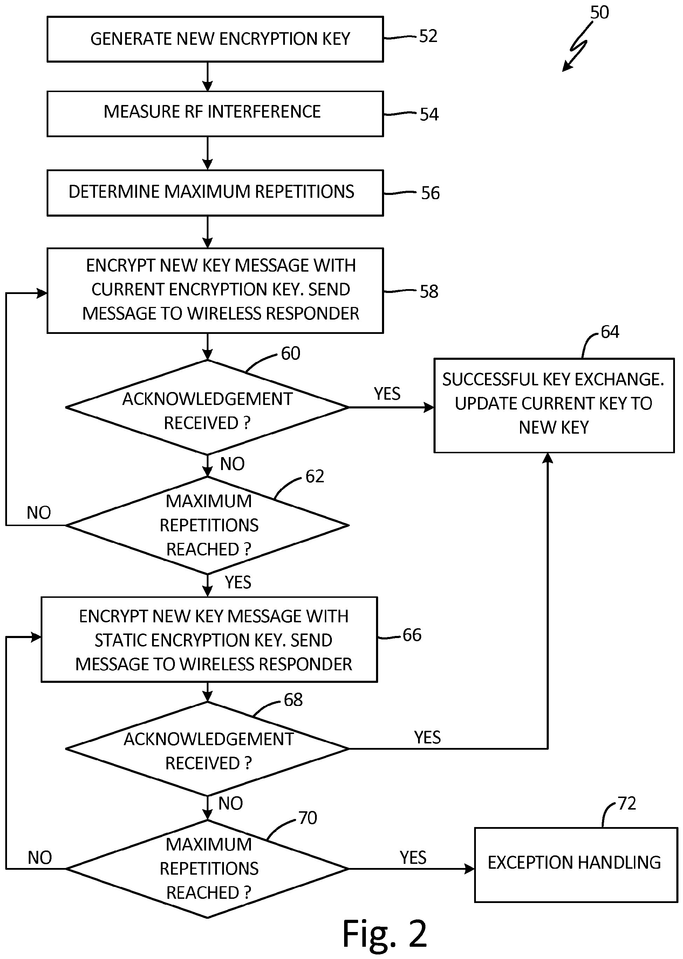

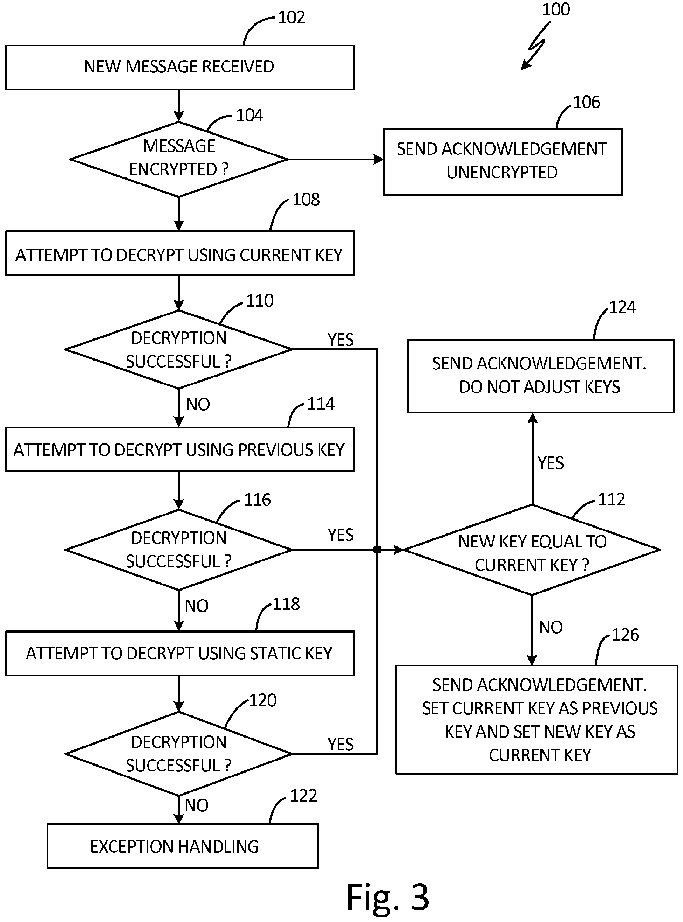

Each time a wireless node 12a-12n receives a transmission from initiator 12, it attempts to decrypt the message. Each wireless node 12a-12n may have its own key stack, for example, implemented in respective memory 24. An example key stack for a wireless node 12a-12n is illustrated in Table 2, below. Each time wireless node 12a-12n receives a message from initiator 12, it may attempt to decrypt the message using all keys in its respective key stack, beginning with the key on the top of the stack. If no key is successful in decrypting the message, the respective wireless node 12a-12n may enter an exception handling state. This key exchange protocol is illustrated in more detail below with respect to FIGS. 2 and 3.

Table 2 - Example Key Stack for wireless Nodes 14a-14n

| Current Key |
| --- |
| Previous Key |
| Static Key |

FIG. 2 is a flowchart illustrating method 50 of performing an encryption key exchange by a wireless initiator such as initiator 12. At step 52, the initiator generates a new secret encryption key. The initiator will provide the new key to all of the associated wireless responders, such as wireless nodes 14a-14n. Method 50 may be performed for each of the wireless responders.

The wireless initiator measures RF interference at step 54. This may be accomplished using transceiver 20. For example, transceiver 20 may include an RF antenna. Transceiver 20 may be used to measure a present RF energy at the antenna and may provide the value to controller 16. The RF power present in the communication channel may be sampled by the transceiver using an energy detection circuit, for example.

At step 56, controller 16 determines a maximum repetition number. Memory 18 may include a lookup table, for example. The lookup table may be indexed into using the measured RF energy. The lookup table may include a list of iteration entries for each interference intensity range of RF energy, for example. The iteration entries indicate a number of iterations that were needed to obtain an acknowledgement for a previous data transmission in that range of RF energy. For example, if the measured RF energy falls in a first range, the entries may be 1, 3, 4, 1, 2, and 2, while if the RF energy falls in a second range, the lookup table entries may be 5, 6, 7, and 6. Thus, a maximum number of iterations for the first range is 4, while an average number of iterations for the second range is 6. Any number of energy ranges may be defined, and any number of entries may be included for each range. While described as a lookup table, any data structure may be used to store iteration numbers with respect to measured RF energy.

The maximum number of iterations may be taken directly from the lookup table, or controller 16 may utilize further probabilistic analysis, for example. The following equation is a basic example of a probabilistic function that controller 16 may utilize to determine a maximum number of repetitions:

$$Max\ Repetitions = \frac{\log(1 - Desired\ probability\ Ack\ is\ received)}{\log(1 - (\frac{1}{average\ repetitions}))} \qquad [1]$$

In equation [1], the desired probability that the acknowledgement is received may be selected based on the needs of the system. For example, in high priority systems that require the system and all nodes to remain functional, the desired probably may be closer to 1.0. The average repetitions may be obtained from the lookup table or other data structure implemented in memory 18. Following determination of the maximum repetitions, method 50 proceeds to step 58 and the wireless initiator begins the key exchange with the wireless responder.

At step 58, the wireless initiator encrypts a message using a current encryption key. The message includes the new encryption key for the wireless responder. The wireless initiator sends the message to the wireless responder. At step 60, it is determined if the initiator received an acknowledgment from the wireless responder in response to the provided message. If not, method 50 proceeds to step 62. If the wireless initiator received the acknowledgement, method 50 proceeds to step 64. At step 62, it is determined if the message transmission has attempted the maximum number of repetitions. If it has, method 50 proceeds to step 66. If it has not, method 60 returns to step 58 and re-attempts transmission of the message.

At step 66, the wireless initiator attempts to send the new key to the wireless responder using a different encryption key. The wireless initiator may have a key stack, such as that illustrated in Table 1, above, stored in its memory, for example. The current key may be the top entry on the key stack, and then at step 66, the next key in the stack may be tried. In one embodiment, the stack includes two keys, the current key and a static key. The static key may be a default encryption key stored in a non-volatile memory of the initiator, for example. This static key may also be stored in non-volatile memory on each of the wireless responders. This way, there will be at least one key that the initiator knows the wireless responder has stored in its memory. In the embodiment illustrated in FIG. 2, the initiator encrypts a message using the static key at step 66 and attempts to send the message to the wireless responder. The message includes the new key. At step 68, it is determined if the initiator received an acknowledgment from the wireless responder in response to the provided message. If not, method 50 proceeds to step 70. If the wireless initiator received the acknowledgement, method 50 proceeds to step 64. At step 70, it is determined if the message transmission has been attempted the maximum number of repetitions. If it has, method 50 proceeds to step 72. If it has not, method 60 returns to step 66 and re-attempts transmission of the method. If the key stack of the initiator includes more than two keys, steps 66 through 70 may be repeated for each remaining key in the stack.

At step 64, an acknowledgement has been received from the wireless responder. The initiator updates its current encryption key to the new encryption key and resumes normal system operation using the new encryption key. The initiator may also update its lookup table to include the number of iterations it took to receive the acknowledgement. The iterations may be added to the table for the range of measured RF energy. At step 72, an exception handling state is determined for the non-responsive wireless responder. The exception handling state may represent, for example, a responder that is unresponsive due to, for example, messages not arriving, nodes not being powered, nodes being damaged, and/or hostile attacks on the nodes. The initiator may remain in the exception handling state for the respective wireless responder for as long as desired by the system. For example, the initiator may wait a certain amount of time, and then reattempt to update the key for the respective wireless responder. While described for one wireless responder, method 50 may be utilized by the wireless initiator to update encryption keys for all wireless responders.

FIG. 3 is a flowchart illustrating method 100 of performing an encryption key exchange by a wireless responder, such as wireless node 14a. At step 102, the wireless responder receives a message from the wireless initiator, which may be initiator 12, for example. At step 104, the wireless responder determines if the message is encrypted. If the message is not encrypted, method 100 proceeds to step 106 and sends an unencrypted acknowledgement to the wireless initiator. If the message is encrypted, method 100 proceeds to step 108 to decrypt the message.

The wireless responder has a current secret key stored in its memory that it is currently using to decrypt communications from initiator 12. At step 108, the wireless responder attempts to decrypt the received message using the current secret key. At step 110, the wireless responder determines if the decryption of the message using the current key was successful. If the message was successfully decrypted, method 100 proceeds to step 112. If the message was unsuccessfully decrypted, method 100 proceeds to step 114 and attempts to decrypt the message using a previous encryption key.

The previous encryption key is stored by the wireless responder for the situation in which the responder has updated its key, but the initiator is unaware that the wireless responder successfully updated the key. For example, the wireless responder has successfully updated its key to the current key, and sends an acknowledgement to the initiator. However, the acknowledgement is never received by the initiator and thus, the initiator thinks that the wireless responder has not successfully updated its key to the current key. The initiator will continue to send messages to the wireless responder using the previous key, so the responder needs to save the previous key so that it may successfully decrypt the incoming messages.

At step 116, the wireless responder determines if the decryption of the message using the previous key was successful. If the message was successfully decrypted using the previous key, method 100 proceeds to step 112. If the message was unsuccessfully decrypted using the previous key, method 100 proceeds to step 118 and attempts to decrypt the message using a static encryption key. At step 120, the wireless responder determines if the decryption of the message using the static key was successful. If the message was successfully decrypted using the static key, method 100 proceeds to step 112. If the message was unsuccessfully decrypted using the static key, method 100 proceeds to step 122 and enters an exception handling state. While described as attempting three keys, any number of keys may be stored and attempted by the wireless responder. For example, the wireless responder may implement a key stack, such as that illustrated in Table 2, above. Method 100 may continue for all keys in the key stack.

At step 122, the wireless responder may remain in the exception handling state, or may optionally resume normal operation to continue receiving messages at step 102. The exception handling state may be a result of number of issues including, but not limited to, corrupt messages from the initiator, bit errors, loss of encryption keys from by the initiator, and/or hostile attacks on the initiator. In some of these cases, the cause of the exception may be temporary. In rare cases, for example, the message may have been corrupted by interference in such way that the message appears valid but cannot be decrypted. In other cases, an attacker may be temporarily masquerading as the initiator. In these cases, as well as other cases defined by the system, it may be desirable for the wireless responder to resume receipt of messages following the exception.

At step 112, the message that includes the new key was successfully decrypted. The wireless responder compares the new key to its current key. If the new key and the current key are the same, step 100 proceeds to step 124 and the wireless responder provides an acknowledgement to the initiator and keeps all stored keys the same. This situation may be encountered if a previous acknowledgement was sent to the initiator, but the initiator never received the acknowledgement so the initiator attempted to send the new key again. If the new key and the current key are not the same, method 100 proceeds to step 126. At step 126, the wireless responder sets its current key as the previous key, and sets the new key as the current key. The wireless responder then sends an acknowledgement to the wireless initiator.

### Discussion of Possible Embodiments

The following are non-exclusive descriptions of possible embodiments of the present invention.

A method of wirelessly exchanging encryption keys between an initiator and a responder includes measuring, by the initiator, radio-frequency interference; selecting, by the initiator, an iteration number based on the measured radio-frequency interference; transmitting, by the initiator, a first message to the responder that includes a new key, wherein the first message is encrypted with a current key; and retransmitting the first message if the initiator did not receive a first acknowledgement from the responder, wherein the initiator is configured to attempt retransmission of the first message the iteration number of times.

The method of the preceding paragraph can optionally include, additionally and/or alternatively, any one or more of the following features, configurations and/or additional components:

A further embodiment of the foregoing method, further including transmitting, by the initiator, a second message to responder that includes the new key encrypted with a static key if the initiator did not receive the first acknowledgement from the responder during any of the iteration number of retransmissions of the first message, wherein the static key is different from the current key.

A further embodiment of any of the foregoing methods, further including retransmitting the second message if the initiator did not receive a second acknowledgement from the responder, wherein the initiator is configured to attempt retransmission of the second message the iteration number of times; and entering, by the initiator, an initiator exception handling state if the initiator does not receive the second acknowledgement from the responder during any of the iteration number of retransmissions of the second message.

A further embodiment of any of the foregoing methods, wherein selecting, by the initiator, an iteration number based on the measured radio-frequency interference includes indexing into a noise lookup table using the measured radio-frequency interference, wherein the noise lookup table includes previous attempt numbers for respective ranges of radio-interference interference values.

A further embodiment of any of the foregoing methods, further including receiving the first acknowledgment after a completion number of transmission attempts of the first message; and adding the completion number to the lookup table using the measured radio-frequency interference.

A further embodiment of any of the foregoing methods, further including receiving, by the responder, the first message; attempting to decrypt, using a current responder key, the first message; updating the current responder key to the new key if the responder successfully decrypted the first message; and transmitting, to the initiator, the first acknowledgement if the responder successfully decrypted the first message.

A further embodiment of any of the foregoing methods, further including attempting to decrypt, using a previous responder key, the first message if the responder unsuccessfully decrypted the first message using the current responder key; updating the current responder key to the new key if the responder successfully decrypted the first message using the previous responder key; and updating the previous responder key to the current key if the responder successfully decrypted the first message using the previous responder key.

A further embodiment of any of the foregoing methods, further including attempting to decrypt, using a static responder key, the first message if the responder unsuccessfully decrypted the first message using the previous responder key; and entering, by the responder, a responder exception handling state if the responder unsuccessfully decrypted the first message using the static responder key.

A wireless system includes an initiator and a responder. The initiator includes a first transceiver and is configured to generate a new encryption key. The responder includes a second transceiver and is configured to communicate wirelessly with the initiator via the second transceiver. The initiator is further configured to measure a radio-frequency interference at the first transceiver and determine an iteration number based upon the radio-frequency interference, and transmit a key update message encrypted with a current encryption key that includes the new encryption key to the wireless responder. The initiator is also configured to resend the key update message the iteration number of times if the initiator did not receive an acknowledgement from the responder.

The wireless system of the preceding paragraph can optionally include, additionally and/or alternatively, any one or more of the following features, configurations and/or additional components:

A further embodiment of the foregoing wireless system, wherein the initiator is configured to encrypt and send the key update message using a static encryption key if the initiator did not receive the acknowledgement from the responder during any of the iteration number of times of sending the key update message encrypted with the current encryption key.

A further embodiment of any of the foregoing wireless systems, wherein the initiator is configured to resend the key update message encrypted with the static encryption key the iteration number of times if the initiator did not receive the acknowledgment following sending the key update message using the static encryption key.

A further embodiment of any of the foregoing wireless systems, wherein the initiator further includes a memory configured to store a lookup table, wherein the lookup table includes a plurality of iteration entries for each of a plurality of ranges of radio-frequency interference energy, and wherein the initiator indexes into the lookup table using the measured radio-frequency interference.

A further embodiment of any of the foregoing wireless systems, wherein the initiator is configured to determine iteration number using a probabilistic function, wherein the initiator enters an output of the lookup table into the probabilistic function to generate the iteration number.

A further embodiment of any of the foregoing wireless systems, wherein the responder is configured to attempt to decrypt the key update message using a current responder key, and transmit an acknowledgement if the key update message is successfully decrypted using the current responder key.

A further embodiment of any of the foregoing wireless systems, wherein the responder is further configured to attempt to decrypt the key update message using a previous responder key if the message is unsuccessfully decrypted using the current responder key, and wherein the responder is further configured to update the current responder key to the new responder key and send the acknowledgement if the key update message was successfully decrypted using the previous responder key.

A further embodiment of any of the foregoing wireless systems, wherein the responder is further configured to attempt to decrypt the key update message using the static encryption key if the message is unsuccessfully decrypted using the previous responder key, and wherein the responder is further configured to update the current responder key to the new responder key and send the acknowledgement if the key update message was successfully decrypted using the static encryption key.

An initiator includes a radio-frequency transmitter, a memory, and a controller. The controller is configured to update a current encryption key to a new encryption key, encrypt a key update message that includes the new encryption key using the current encryption key, and attempt to send the key update message to a wireless node a selected number of times based upon a measured radio-frequency energy at the radio-frequency transmitter.

The initiator of the preceding paragraph can optionally include, additionally and/or alternatively, any one or more of the following features, configurations and/or additional components:

A further embodiment of the foregoing initiator, wherein the controller is further configured to encrypt the key update message with a static encryption key if the initiator does not receive an acknowledgment from the wireless node after the selected number of times sending the key update message encrypted with the current encryption key.

A further embodiment of any of the foregoing initiators, wherein the controller is further configured to send the key update message encrypted with the static encryption key to the wireless node the selected number of times.

A further embodiment of any of the foregoing initiators, wherein the controller is further configured to indicate an exception handling state for the wireless node if the initiator did not receive the acknowledgment from the wireless node after the selected number of times sending the key update message encrypted with the static encryption key.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

**Claims**

1. A method of wirelessly exchanging encryption keys between an initiator (12) and a responder (14a), the method comprising:

   measuring (54), by the initiator (12), radio-frequency interference in a range of radio frequency energy;
   selecting (56), by the initiator (12), an iteration number based on the measured radio-frequency interference and a number of iterations needed to obtain an acknowledgement for a previous data transmission in the range of radio frequency energy;
   generating (52), by the initiator (12), a new key;
   transmitting (58), by the initiator (12), a first message to the responder (14a) that includes the new key, wherein the first message is encrypted with a current key; and
   retransmitting the first message if the initiator (12) did not receive a first acknowledgement from the responder (14a), wherein the initiator (12) is configured to attempt retransmission of the first message the iteration number of times or until the initiator (12) receives an acknowledgement from the responder (14a).

2. The method of claim 1, further comprising:
   transmitting (66), by the initiator (12), a second message to the responder (14a) that includes the new key encrypted with a static key if the initiator (12) did not receive the first acknowledgement from the responder during any of the iteration number of retransmissions of the first message, wherein the static key is different from the current key.

3. The method of claim 2, further comprising:

   retransmitting the second message if the initiator (12) did not receive a second acknowledgement from the responder (14a), wherein the initiator (12) is configured to attempt retransmission of the second message the iteration number of times; and
   entering (72), by the initiator (12), an initiator exception handling state if the initiator (12) does not receive the second acknowledgement from the responder (14a) during any of the iteration number of retransmissions of the second message.

4. The method of any preceding claim, wherein selecting, by the initiator (12), an iteration number based on the measured radio-frequency interference comprises:
   indexing into a noise lookup table using the measured radio-frequency interference, wherein the noise lookup table includes previous attempt numbers for respective ranges of radio-interference interference values.

5. The method of claim 4, further comprising:

   receiving the first acknowledgment after a completion number of transmission attempts of the first message; and
   adding the completion number to the lookup table using the measured radio-frequency interference.

6. The method of any preceding claim, comprising:

   receiving (102), by the responder (14a), the first message;
   attempting to decrypt (108), using a current responder key, the first message;
   updating (112) the current responder key to the new key if the responder (14a) successfully decrypted the first message; and
   transmitting (124), to the initiator (12), the first acknowledgement if the responder (14a) successfully decrypted the first message.

7. The method of claim 6, further comprising:

attempting to decrypt (114), using a previous responder key, the first message if the responder (14a) unsuccessfully decrypted the first message using the current responder key;

updating (112) the current responder key to the new key if the responder (14a) successfully decrypted the first message using the previous responder key; and

updating (126) the previous responder key to the current key if the responder (14a) successfully decrypted the first message using the previous responder key.

8. The method of claim 7, further comprising:

attempting to decrypt (118), using a static responder key, the first message if the responder (14a) unsuccessfully decrypted the first message using the previous responder key; and

entering (122), by the responder (14a), a responder exception handling state if the responder (14a) unsuccessfully decrypted the first message using the static responder key.

9. A wireless system comprising:

an initiator (12) that includes a first transceiver (20), wherein the initiator (12) is configured to generate (52) a new encryption key; and

a responder (14a) that includes a second transceiver (28), wherein the responder (14a) is configured to communicate wirelessly with the initiator (12) via the second transceiver (28);

wherein the initiator (12) is further configured to measure (54) a radio-frequency interference at the first transceiver (20) in a range of radio frequency energy and determine (56) an iteration number based upon the radio-frequency interference and a number of iterations needed to obtain an acknowledgement for a previous data transmission in the range of radio frequency energy; and

wherein the initiator (12) is configured to transmit (58) a key update message that includes the new encryption key to the wireless responder (14a), wherein the key update message is encrypted with a current encryption key; and

wherein the initiator (12) is configured to resend the key update message the iteration number of times if the initiator (12) did not receive an acknowledgement from the responder (14a) or until the initiator (12) receives an acknowledgement from the responder (14a).

10. The wireless system of claim 9, wherein the initiator (12) is configured to encrypt and send (66) the key update message using a static encryption key if the initiator (12) did not receive the acknowledgement from the responder (14a) during any of the iteration number of times of sending the key update message encrypted with the current encryption key

optionally wherein the initiator (12) is configured to resend the key update message encrypted with the static encryption key the iteration number of times if the initiator (12) did not receive the acknowledgment following sending the key update message using the static encryption key.

11. The wireless system of claim 10, wherein the initiator (12) further includes a memory (18) configured to store a lookup table, wherein the lookup table includes a plurality of iteration entries for each of a plurality of ranges of radio-frequency interference energy, and wherein the initiator (12) indexes into the lookup table using the measured radio-frequency interference;

optionally, wherein the initiator (12) is configured to determine iteration number using a probabilistic function, wherein the initiator (12) enters an output of the lookup table into the probabilistic function to generate the iteration number.

12. The wireless system of claim 9, 10 or 11, wherein the responder (14a) is configured to attempt to decrypt (108) the key update message using a current responder key, and transmit an acknowledgement (124) if the key update message is successfully decrypted using the current responder key;

optionally wherein the responder (14a) is further configured to attempt to decrypt (114) the key update message using a previous responder key if the message is unsuccessfully decrypted using the current responder key, and wherein the responder is further configured to update (126) the current responder key to the new responder key and send the acknowledgement if the key update message was successfully decrypted using the previous responder key and/or wherein the responder (14a) is further configured to attempt to decrypt (118) the key update message using the static encryption key if the message is unsuccessfully decrypted using the previous responder key, and wherein the responder (14a) is further configured to update (126) the current responder key to the new responder key and send the acknowledgement if the key update message was successfully decrypted using the static encryption key.

13. An initiator comprising:

a radio-frequency transmitter configured to transmit a range of radio frequency energy;
a memory (18); and
a controller (16) configured to update a current encryption key to a new encryption key, wherein the controller (16) is further configured to generate (52) the new encryption key, encrypt (58) a key update message that includes the new encryption key using the current encryption key, and wherein the controller (16) is further configured to attempt to send the key update message to a wireless node a selected number of times based upon a measured radio-frequency energy at the radio-frequency transmitter and a number of iterations needed to obtain an acknowledgement for a previous data transmission in the range of radio frequency energy or until the initiator (12) receives an acknowledgement from a responder (14a).

14. The initiator of claim 13, wherein the controller (16) is further configured to encrypt (66) the key update message with a static encryption key if the initiator (12) does not receive an acknowledgment from the wireless node after the selected number of times sending the key update message encrypted with the current encryption key; and optionally wherein the controller (16) is further configured to send the key update message encrypted with the static encryption key to the wireless node the selected number of times.

15. The initiator of claim 14, wherein the controller (16) is further configured to indicate (72) an exception handling state for the wireless node if the initiator (12) did not receive the acknowledgment from the wireless node after the selected number of times sending the key update message encrypted with the static encryption key.


**Patentansprüche**

1. Verfahren zum drahtlosen Austauschen von Verschlüsselungsschlüsseln zwischen einem Initiator (12) und einem Antwortgeber (14a), wobei das Verfahren Folgendes umfasst:

Messen (54), durch den Initiator (12), einer Hochfrequenzstörung in einem Hochfrequenzenergiebereich;
Auswählen (56), durch den Initiator (12), einer Iterationszahl basierend auf der gemessenen Hochfrequenzstörung und einer Anzahl von Iterationen, die erforderlich sind, um eine Bestätigung für eine vorherige Datenübertragung im Bereich der Hochfrequenzenergie einzuholen;
Erzeugen (52), durch den Initiator (12), eines neuen Schlüssels;
Übertragen (58), durch den Initiator (12), einer ersten Nachricht an den Antwortgeber (14a), die den neuen Schlüssel beinhaltet, wobei die erste Nachricht mit einem aktuellen Schlüssel verschlüsselt ist; und
erneutes Übertragen der ersten Nachricht, wenn der Initiator (12) keine erste Bestätigung von dem Antwortgeber (14a) empfangen hat, wobei der Initiator (12) so konfiguriert ist, dass er eine erneute Übertragung der ersten Nachricht für die Iterationszahl an Malen versucht oder bis der Initiator (12) eine Bestätigung von dem Antwortgeber (14a) empfängt.

2. Verfahren nach Anspruch 1, ferner Folgendes umfassend:
Übertragen (66), durch den Initiator (12), einer zweiten Nachricht an den Antwortgeber (14a), die den neuen Schlüssel beinhaltet und mit einem statischen Schlüssel verschlüsselt ist, wenn der Initiator (12) keine erste Bestätigung von dem Antwortgeber während einer der Iterationszahl von erneuten Übertragungen der ersten Nachricht empfangen hat, wobei sich der statische Schlüssel von dem aktuellen Schlüssel unterscheidet.

3. Verfahren nach Anspruch 2, ferner Folgendes umfassend:

erneutes Übermitteln der zweiten Nachricht, wenn der Initiator (12) keine zweite Bestätigung von dem Antwortgeber (14a) erhalten hat, wobei der Initiator (12) so konfiguriert ist, dass er eine erneute Übertragung der zweiten Nachricht für die Iterationszahl von Malen versucht; und
Eintreten (72), durch den Initiator (12), in einen Initiator-Ausnahmebehandlungszustand, wenn der Initiator (12) die zweite Bestätigung von dem Antwortgeber (14a) nicht während einer der Iterationszahl der erneuten Übertragungen der zweiten Nachricht empfängt.

4. Verfahren nach einem der vorstehenden Ansprüche, wobei das Auswählen, durch den Initiator (12), einer Iterationszahl basierend auf der gemessenen Hochfrequenzstörung Folgendes umfasst:
Indizieren in eine Rauschen-Lookup-Tabelle unter Verwendung der gemessenen Hochfrequenzstörung, wobei die Rauschen-Lookup-Tabelle vorherige Versuchszahlen für jeweilige Bereiche von Hochfrequenzstörungswerten beinhaltet.

5. Verfahren nach Anspruch 4, ferner Folgendes umfassend:

Empfangen der ersten Bestätigung nach einer Fertigstellungszahl von Übertragungsversuchen der ersten Nachricht; und
Zufügen der Fertigstellungszahl zu der Lookup-Tabelle unter Verwendung der gemessenen Hochfrequenzstörung.

6. Verfahren nach einem der vorstehenden Ansprüche, umfassend:

Empfangen (102), durch den Antwortgeber (14a), der ersten Nachricht;
Versuchen, die erste Nachricht unter Verwendung eines aktuellen Antwortgeber-Schlüssels zu entschlüsseln (108);
Aktualisieren (112) des aktuellen Antwortgeber-Schlüssels auf den neuen Schlüssel, wenn der Antwortgeber (14a) die erste Nachricht erfolgreich entschlüsselt hat; und
Übertragen (124), an den Initiator (12), der ersten Bestätigung, wenn der Antwortgeber (14a) die erste Nachricht erfolgreich entschlüsselt hat.

7. Verfahren nach Anspruch 6, ferner Folgendes umfassend:

Versuchen, die erste Nachricht unter Verwendung eines vorherigen Antwortgeber-Schlüssels zu entschlüsseln (114), wenn der Antwortgeber (14a) die erste Nachricht unter Verwendung des aktuellen Antwortgeber-Schlüssels nicht erfolgreich entschlüsselt hat;
Aktualisieren (112) des aktuellen Antwortgeber-Schlüssels auf den neuen Schlüssel, wenn der Antwortgeber (14a) die erste Nachricht unter Verwendung des vorherigen Antwortgeber-Schlüssels erfolgreich entschlüsselt hat; und
Aktualisieren (126) des vorherigen Antwortgeber-Schlüssels auf den aktuellen Schlüssel, wenn der Antwortgeber (14a) die erste Nachricht unter Verwendung des vorherigen Antwortgeber-Schlüssels erfolgreich entschlüsselt hat.

8. Verfahren nach Anspruch 7, ferner Folgendes umfassend:

Versuchen, die erste Nachricht unter Verwendung eines statischen Antwortgeber-Schlüssels zu entschlüsseln (118), wenn der Antwortgeber (14a) die erste Nachricht unter Verwendung des vorherigen Antwortgeber-Schlüssels nicht erfolgreich entschlüsselt hat; und
Eintreten (122), durch den Antwortgeber (14a), in einen Antwortgeber-Ausnahmebehandlungszustand, wenn der Antwortgeber (14a) die erste Nachricht unter Verwendung des statischen Antwortgeber-Schlüssels nicht erfolgreich entschlüsselt hat.

9. Drahtloses System, umfassend:

einen Initiator (12), der einen ersten Sender-Empfänger (20) beinhaltet, wobei der Initiator (12) so konfiguriert ist, dass er einen neuen Verschlüsselungsschlüssel erzeugt (52); und
einen Antwortgeber (14a), der einen zweiten Sender-Empfänger (28) beinhaltet, wobei der Antwortgeber (14a) so konfiguriert ist, dass er drahtlos mit dem Initiator (12) über den zweiten Sender-Empfänger (28) kommuniziert;
wobei der Initiator (12) ferner so konfiguriert ist, dass er eine Hochfrequenzstörung an dem ersten Sender-Empfänger (20) in einem Hochfrequenzenergiebereich misst (54) und eine Iterationszahl basierend auf der Hochfrequenzstörung und einer Anzahl von Iterationen, die erforderlich sind, um eine Bestätigung für eine vorherige Datenübertragung im Bereich der Hochfrequenzenergie einzuholen, ermittelt (56); und
wobei der Initiator (12) so konfiguriert ist, dass er eine Schlüsselaktualisierungsnachricht, die den neuen Verschlüsselungsschlüssel beinhaltet, an den drahtlosen Antwortgeber (14a) überträgt (58), wobei die Schlüsselaktualisierungsnachricht mit einem aktuellen Verschlüsselungsschlüssel verschlüsselt ist; und
wobei der Initiator (12) so konfiguriert ist, dass er die Schlüsselaktualisierungsnachricht die Iterationszahl von Malen erneut sendet, wenn der Initiator (12) keine Bestätigung von dem Antwortgeber (14a) empfangen hat, oder bis der Initiator (12) eine Bestätigung von dem Antwortgeber (14a) empfängt.

10. Drahtloses System nach Anspruch 9, wobei der Initiator (12) so konfiguriert ist, dass er die Schlüsselaktualisierungsnachricht unter Verwendung eines statischen Verschlüsselungsschlüssels verschlüsselt und sendet (66), wenn der Initiator (12) keine Bestätigung von dem Antwortgeber (14a) während einer der Iterationszahl von Malen des Sendens der Schlüsselaktualisierungsnachricht, die mit dem aktuellen Verschlüsselungsschlüssel verschlüsselt ist, empfangen hat,
optional wobei der Initiator (12) so konfiguriert ist, dass er die Schlüsselaktualisierungsnachricht, die mit dem statischen Verschlüsselungsschlüssel verschlüsselt ist, die Iterationszahl von Malen erneut sendet, wenn der Initiator (12) keine Bestätigung nach dem Senden der Schlüsselaktualisierungsnachricht unter Verwendung des statischen Verschlüsselungsschlüssel empfangen hat.

11. Drahtloses System nach Anspruch 10, wobei der Initiator (12) ferner einen Speicher (18) beinhaltet, der so konfiguriert ist, dass er eine Lookup-Tabelle speichert, wobei die Lookup-Tabelle eine Vielzahl von Iterationseinträgen für jeden von einer Vielzahl von Hochfrequenzstörungsenergiebereichen beinhaltet, und wobei der Initiator (12) in die Lookup-Tabelle unter Verwendung der gemessenen Hochfrequenzstörung indiziert;
optional wobei der Initiator (12) so konfiguriert ist, dass er die Iterationszahl unter Verwendung einer Wahrscheinlichkeitsfunktion ermittelt, wobei der Initiator (12) ein Ergebnis der Lookup-Tabelle in die Wahrscheinlichkeitsfunktion einsetzt, um die Iterationszahl zu erzeugen.

12. Drahtloses System nach Anspruch 9, 10 oder 11, wobei der Antwortgeber (14a) so konfiguriert ist, dass er versucht, die Schlüsselaktualisierungsnachricht unter Verwendung eines aktuellen Antwortgeber-Schlüssels (108) zu entschlüsseln, und eine Bestätigung (124) sendet, wenn die Schlüsselaktualisierungsnachricht unter Verwendung des aktuellen Antwortgeber-Schlüssels erfolgreich entschlüsselt wurde;
optional wobei der Antwortgeber (14a) ferner so konfiguriert ist, dass er versucht, die Schlüsselaktualisierungsnachricht unter Verwendung eines vorherigen Antwortgeber-Schlüssels zu entschlüsseln (114), wenn die Nachricht unter Verwendung des aktuellen Antwortgeber-Schlüssels nicht erfolgreich entschlüsselt wurde, und wobei der Antwortgeber ferner so konfiguriert ist, dass er den aktuellen Antwortgeber-Schlüssel auf den neuen Antwortgeber-Schlüssel aktualisiert (126) und die Bestätigung sendet, wenn die Schlüsselaktualisierungsnachricht unter Verwendung des vorherigen Antwortgeber-Schlüssels erfolgreich aktualisiert wurde, und/oder wobei der Antwortgeber (14a) ferner so konfiguriert ist, dass er versucht, die Schlüsselaktualisierungsnachricht unter Verwendung des statischen Verschlüsselungsschlüssels zu entschlüsseln (118), wenn die Nachricht unter Verwendung des vorherigen Antwortgeber-Schlüssels nicht erfolgreich entschlüsselt wurde, und wobei der Antwortgeber (14a) ferner so konfiguriert ist, dass er den aktuellen Antwortgeber-Schlüssel auf den neuen Antwortgeber-Schlüssel (126) aktualisiert und die Bestätigung sendet, wenn die Schlüsselaktualisierungsnachricht unter Verwendung des statischen Verschlüsselungsschlüssels erfolgreich entschlüsselt wurde.

13. Initiator, umfassend:

einen Hochfrequenzsender, der so konfiguriert ist, dass er einen Hochfrequenzenergiebereich übertragen kann;
einen Speicher (18); und
eine Steuerung (16), die so konfiguriert ist, dass sie einen aktuellen Verschlüsselungsschlüssel auf einen neuen Verschlüsselungsschlüssel aktualisiert, wobei die Steuerung (16) ferner so konfiguriert ist, dass sie den neuen Verschlüsselungsschlüssel erzeugt (52), eine Schlüsselaktualisierungsnachricht, die den neuen Verschlüsselungsschlüssel beinhaltet, unter Verwendung des aktuellen Verschlüsselungsschlüssels verschlüsselt (58), und wobei die Steuerung (16) ferner so konfiguriert ist, dass sie versucht, die Schlüsselaktualisierungsnachricht an einen drahtlosen Knoten eine ausgewählte Anzahl von Malen basierend auf einer gemessenen Hochfrequenzenergie an dem Hochfrequenzsender und einer Anzahl von Iterationen, die erforderlich ist, um eine Bestätigung für eine vorherige Datenübertragung in dem Hochfrequenzenergiebereich einzuholen, oder bis der Initiator (12) eine Bestätigung von einem Antwortgeber (14a) empfängt, sendet.

14. Initiator nach Anspruch 13, wobei die Steuerung (16) ferner so konfiguriert ist, dass sie die Schlüsselaktualisierungsnachricht mit einem statischen Verschlüsselungsschlüssel verschlüsselt (66), wenn der Initiator (12) keine Bestätigung von dem drahtlosen Knoten nach der ausgewählten Anzahl von Malen des Sendens der Schlüsselaktualisierungsnachricht, die mit dem aktuellen Verschlüsselungsschlüssel verschlüsselt ist, empfangen hat; und
optional wobei die Steuerung (16) ferner so konfiguriert ist, dass sie die Schlüsselaktualisierungsnachricht, die mit dem statischen Verschlüsselungsschlüssel verschlüsselt ist, die ausgewählte Anzahl von Malen an den drahtlosen Knoten sendet.

15. Initiator nach Anspruch 14, wobei die Steuerung (16) ferner so konfiguriert ist, dass sie einen Ausnahmebehandlungszustand für den drahtlosen Knoten angibt (72), wenn der Initiator (12) keine Bestätigung von dem drahtlosen Knoten nach der ausgewählten Anzahl von Malen des Sendens der Schlüsselaktualisierungsnachricht, die mit dem statischen Verschlüsselungsschlüssel verschlüsselt ist, empfangen hat.

**Revendications**

1.  Procédé d'échange sans fil de clés de cryptage entre un initiateur (12) et un répondeur (14a), le procédé comprenant :

    la mesure (54), par l'initiateur (12), d'une interférence de radiofréquence dans une plage d'énergie de radiofréquence ;
    la sélection (56), par l'initiateur (12), d'un nombre d'itérations sur la base de l'interférence de radiofréquence mesurée et d'un nombre d'itérations nécessaires pour obtenir un accusé de réception pour une transmission de données précédente dans la plage d'énergie de radiofréquence ;
    la génération (52), par l'initiateur (12), d'une nouvelle clé ;
    la transmission (58), par l'initiateur (12), d'un premier message au répondeur (14a) qui comporte la nouvelle clé, dans lequel le premier message est crypté avec une clé actuelle ; et
    la retransmission du premier message si l'initiateur (12) n'a pas reçu un premier accusé de réception depuis le répondeur (14a), dans lequel l'initiateur (12) est configuré pour tenter une retransmission du premier message le nombre d'itérations de fois ou jusqu'à ce que l'initiateur (12) reçoive un accusé de réception depuis le répondeur (14a).

2.  Procédé selon la revendication 1, comprenant en outre :
    la transmission (66), par l'initiateur (12), d'un second message au répondeur (14a) qui comporte la nouvelle clé cryptée avec une clé statique si l'initiateur (12) n'a pas reçu le premier accusé de réception depuis le répondeur pendant l'une quelconque du nombre d'itérations de retransmissions du premier message, dans lequel la clé statique est différente de la clé actuelle.

3.  Procédé selon la revendication 2, comprenant en outre :

    la retransmission du second message si l'initiateur (12) n'a pas reçu un second accusé de réception depuis le répondeur (14a), dans lequel l'initiateur (12) est configuré pour tenter une retransmission du second message le nombre d'itérations de fois ; et
    l'entrée (72), par l'initiateur (12), d'un état de traitement d'exception d'initiateur si l'initiateur (12) ne reçoit pas le second accusé de réception depuis le répondeur (14a) pendant l'une quelconque du nombre d'itérations de retransmissions du second message.

4.  Procédé selon une quelconque revendication précédente, dans lequel la sélection, par l'initiateur (12), d'un nombre d'itérations sur la base de l'interférence de radiofréquence mesurée comprend :
    l'indexation dans une table de recherche de bruit en utilisant l'interférence de radiofréquence mesurée, dans lequel la table de recherche de bruit comporte des nombres de tentatives précédentes pour des plages respectives de valeurs d'interférence de radio interférence.

5.  Procédé selon la revendication 4, comprenant en outre :

    la réception du premier accusé de réception après un nombre de complétions de tentatives de transmission du premier message ; et
    l'ajout du nombre de complétions à la table de recherche en utilisant l'interférence de radiofréquence mesuré.

6.  Procédé selon une quelconque revendication précédente, comprenant :

    la réception (102), par le répondeur (14a), du premier message ;
    la tentative de décryptage (108), en utilisant une clé de répondeur actuelle, du premier message ;
    la mise à jour (112) de la clé de répondeur actuelle vers la nouvelle clé si le répondeur (14a) a décrypté avec succès le premier message ; et
    la transmission (124), à l'initiateur (12), du premier accusé de réception si le répondeur (14a) a décrypté avec succès le premier message.

**7.** Procédé selon la revendication 6, comprenant en outre :

la tentative de décryptage (114), en utilisant une clé de répondeur précédente, du premier message si le répondeur (14a) a décrypté sans succès le premier message en utilisant la clé de répondeur actuelle ;
la mise à jour (112) de la clé de répondeur actuelle vers la nouvelle clé si le répondeur (14a) a décrypté avec succès le premier message en utilisant la clé de répondeur précédente ; et
la mise à jour (126) de la clé de répondeur précédente vers la clé actuelle si le répondeur (14a) a décrypté avec succès le premier message en utilisant la clé de répondeur précédente.

**8.** Procédé selon la revendication 7, comprenant en outre :

la tentative de décryptage (118), en utilisant une clé de répondeur statique, du premier message si le répondeur (14a) a décrypté sans succès le premier message en utilisant la clé de répondeur précédente ; et
l'entrée (122), par le répondeur (14a), d'un état de traitement d'exception de répondeur si le répondeur (14a) a décrypté ans succès le premier message en utilisant la clé de répondeur statique.

**9.** Système sans fil comprenant :

un initiateur (12) qui comporte un premier émetteur-récepteur (20), dans lequel l'initiateur (12) est configuré pour générer (52) une nouvelle clé de cryptage ; et
un répondeur (14a) qui comporte un second émetteur-récepteur (28), dans lequel le répondeur (14a) est configuré pour communiquer sans fil avec l'initiateur (12) par l'intermédiaire du second émetteur-récepteur (28) ;
dans lequel l'initiateur (12) est en outre configuré pour mesurer (54) une interférence de radiofréquence au niveau du premier émetteur-récepteur (20) dans une plage d'énergie de radiofréquence et déterminer (56) un nombre d'itérations sur la base de l'interférence de radiofréquence et d'un nombre d'itérations nécessaires pour obtenir un accusé de réception pour une transmission de données précédente dans la plage d'énergie de radiofréquence ; et
dans lequel l'initiateur (12) est configuré pour transmettre (58) un message de mise à jour de clé qui comporte la nouvelle clé de cryptage au répondeur sans fil (14a), dans lequel le message de mise à jour de clé est crypté avec une clé de cryptage actuelle ; et
dans lequel l'initiateur (12) est configuré pour renvoyer le message de mise à jour de clé le nombre d'itérations de fois si l'initiateur (12) n'a pas reçu un accusé de réception depuis le répondeur (14a) ou jusqu'à ce que l'initiateur (12) reçoive un accusé de réception depuis le répondeur (14a).

**10.** Système sans fil selon la revendication 9, dans lequel l'initiateur (12) est configuré pour crypter et envoyer (66) le message de mise à jour de clé en utilisant une clé de cryptage statique si l'initiateur (12) n'a pas reçu l'accusé de réception depuis le répondeur (14a) pendant l'une quelconque du nombre d'itérations de fois d'envoi du message de mise à jour de clé crypté avec la clé de cryptage actuelle
éventuellement dans lequel l'initiateur (12) est configuré pour renvoyer le message de mise à jour de clé crypté avec la clé de cryptage statique le nombre d'itérations de fois si l'initiateur (12) n'a pas reçu l'accusé de réception à la suite de l'envoi du message de mise à jour de clé en utilisant la clé de cryptage statique.

**11.** Système sans fil selon la revendication 10, dans lequel l'initiateur (12) comporte en outre une mémoire (18) configurée pour stocker une table de recherche, dans lequel la table de recherche comporte une pluralité d'entrées d'itération pour chacune d'une pluralité de plages d'énergie d'interférence de radiofréquence, et dans lequel l'initiateur (12) indexe dans la table de recherche en utilisant l'interférence de radiofréquence mesurée ;
éventuellement, dans lequel l'initiateur (12) est configuré pour déterminer un nombre d'itérations en utilisant une fonction probabiliste, dans lequel l'initiateur (12) entre une sortie de la table de recherche dans la fonction probabiliste pour générer le nombre d'itérations.

**12.** Système sans fil selon la revendication 9, 10 ou 11, dans lequel le répondeur (14a) est configuré pour tenter de décrypter (108) le message de mise à jour de clé en utilisant une clé de répondeur actuelle, et transmettre un accusé de réception (124) si le message de mise à jour de clé est décrypté avec succès en utilisant la clé de répondeur actuelle ;
éventuellement dans lequel le répondeur (14a) est en outre configuré pour tenter de décrypter (114) le message de mise à jour de clé en utilisant une clé de répondeur précédente si le message est décrypté sans succès en utilisant la clé de répondeur actuelle, et dans lequel le répondeur est en outre configuré pour mettre à jour (126) la clé de répondeur actuelle vers la nouvelle clé de répondeur et envoyer l'accusé de réception si le message de mise à jour de clé a été décrypté avec succès en utilisant la clé de répondeur précédente et/ou dans lequel le répondeur (14a) est en outre configuré pour tenter de décrypter (118) le message de mise à jour de clé en utilisant la clé de cryptage statique si le message est décrypté sans succès en utilisant la clé de répondeur précédente, et dans lequel le répondeur (14a) est en outre configuré pour mettre à jour (126) la clé de répondeur actuelle vers la nouvelle clé de répondeur et envoyer l'accusé de réception si le message de mise à jour de clé était décrypté avec succès en utilisant la clé de cryptage statique.

13. Initiateur comprenant :

un émetteur de radiofréquence configuré pour transmettre une plage d'énergie de radiofréquence ;
une mémoire (18) ; et
un dispositif de commande (16) configuré pour mettre à jour une clé de cryptage actuelle vers une nouvelle clé de cryptage, dans lequel le dispositif de commande (16) est en outre configuré pour générer (52) la nouvelle clé de cryptage, crypter (58) un message de mise à jour de clé qui comporte la nouvelle clé de cryptage en utilisant la clé de cryptage actuelle, et dans lequel le dispositif de commande (16) est en outre configuré pour tenter d'envoyer le message de mise à jour de clé à un nœud sans fil un nombre de fois sélectionné sur la base d'une énergie de radiofréquence mesurée au niveau de l'émetteur de radiofréquence et d'un nombre d'itérations nécessaires pour obtenir un accusé de réception pour une transmission de données précédente dans la plage d'énergie de radiofréquence ou jusqu'à ce que l'initiateur (12) reçoive un accusé de réception depuis un répondeur (14a).

14. Initiateur selon la revendication 13, dans lequel le dispositif de commande (16) est en outre configuré pour crypter (66) le message de mise à jour de clé avec une clé de cryptage statique si l'initiateur (12) ne reçoit pas un accusé de réception depuis le nœud sans fil après le nombre de fois sélectionné d'envoi du message de mise à jour de clé crypté avec la clé de cryptage actuelle ; et
éventuellement dans lequel le dispositif de commande (16) est en outre configuré pour envoyer le message de mise à jour de clé crypté avec la clé de cryptage statique au nœud sans fil le nombre de fois sélectionné.

15. Initiateur selon la revendication 14, dans lequel le dispositif de commande (16) est en outre configuré pour indiquer (72) un état de traitement d'exception pour le nœud sans fil si l'initiateur (12) n'a pas reçu l'accusé de réception depuis le nœud sans fil après le nombre de fois sélectionné d'envoi du message de mise à jour de clé crypté avec la clé de cryptage statique.

Fig. 1

GENERATE NEW ENCRYPTION KEY — 52

MEASURE RF INTERFERENCE — 54

DETERMINE MAXIMUM REPETITIONS — 56

ENCRYPT NEW KEY MESSAGE WITH CURRENT ENCRYPTION KEY. SEND MESSAGE TO WIRELESS RESPONDER — 58

60 — ACKNOWLEDGEMENT RECEIVED ? — YES → SUCCESSFUL KEY EXCHANGE. UPDATE CURRENT KEY TO NEW KEY — 64

NO

62 — MAXIMUM REPETITIONS REACHED ? — NO

YES

ENCRYPT NEW KEY MESSAGE WITH STATIC ENCRYPTION KEY. SEND MESSAGE TO WIRELESS RESPONDER — 66

68 — ACKNOWLEDGEMENT RECEIVED ? — YES

NO

70 — MAXIMUM REPETITIONS REACHED ? — NO

YES → EXCEPTION HANDLING — 72

50

## Fig. 2

100

102
NEW MESSAGE RECEIVED

104
MESSAGE ENCRYPTED ?

106
SEND ACKNOWLEDGEMENT UNENCRYPTED

108
ATTEMPT TO DECRYPT USING CURRENT KEY

110
DECRYPTION SUCCESSFUL ?

YES

NO

124
SEND ACKNOWLEDGEMENT. DO NOT ADJUST KEYS

114
ATTEMPT TO DECRYPT USING PREVIOUS KEY

116
DECRYPTION SUCCESSFUL ?

YES

YES

112
NEW KEY EQUAL TO CURRENT KEY ?

NO

NO

118
ATTEMPT TO DECRYPT USING STATIC KEY

126
SEND ACKNOWLEDGEMENT. SET CURRENT KEY AS PREVIOUS KEY AND SET NEW KEY AS CURRENT KEY

120
DECRYPTION SUCCESSFUL ?

YES

NO

122
EXCEPTION HANDLING

Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2154814 A
- US 2005015589 A
- EP 3116187 A
- US 20020159598 A
- US 2009280822 A